# EUROPEAN PATENT APPLICATION

(11) **EP 4 322 705 A1**
(43) Date of publication of application: **14.02.2024**
(21) Application number: 22836546.6
(22) Date of filing: 02.04.2022
(51) Int. Cl.: H04W 80/02, H04W 16/10, G01S 13/02, H04W 72/04

(54) **SIGNAL SENDING AND SIGNAL RECEIVING METHODS, COMMUNICATION NODE, AND STORAGE MEDIUM**

(30) Priority: 09.07.2021 CN 202110777758
(71) Applicant: ZTE Corporation, Shenzhen, Guangdong 518057 (CN)
(72) Inventor: XIA, Shuqiang, Shenzhen, Guangdong 518057 (CN); HAO, Peng, Shenzhen, Guangdong 518057 (CN); YANG, Li, Shenzhen, Guangdong 518057 (CN); XIE, Feng, Shenzhen, Guangdong 518057 (CN)
(74) Representative: Savi, Massimiliano
(86) International application number: PCT/CN2022/085124
(87) International publication number: WO 2023/279787

(57) **Abstract**

Signal sending and signal receiving methods, a communication node, and a storage medium. A signal sending method comprises sending indication information, the indication information being used to indicate a preset resource set for transmitting a sensing signal and timing advance information corresponding to the preset resource set (110); and receiving the sensing signal and a first communication signal sent by a second node (120).

## Description

### CROSS-REFERENCE TO RELATED APPLICATION

This application is filed on the basis of the Chinese patent application No. 202110777758.6 filed July 9, 2021, and claims priority of the Chinese patent application, the entire contents of which are incorporated herein by reference.

### TECHNICAL FIELD

The present disclosure relates to the technical field of wireless communication networks, in particular, relates to a method for signal transmission, a method for signal reception, a communication node, and a storage medium.

### BACKGROUND

Traditional communication nodes, such as base stations, mainly provide information transmission services. In order to meet the demands for typical services in new scenarios such as Vehicle-to-everything (V2X), smart factories and augmented reality, future base stations will have both communication and sensing functions. The targets perceived by base stations can be targets with communication capabilities, such as terminal devices, or objects without communication capabilities, such as vehicles or obstacles. In order to make full use of the scarce spectrum resources and reduce costs, communication and sensing functions can utilize the spectrum or antenna, baseband and other resources with the same frequencies. Such communication nodes can be called integrated sensing and communication, (ISAC) nodes.

At the same time when an ISAC node is receiving a communication signal, the ISAC node may be also receiving a sensing signal reflected by a target. The target and the sender of the communication signal may be the same object or individual objects. The difference lies in that the transmitted communication signal can be controlled by the ISAC node. For example, an ISAC base station controls the moment at which a communication signal is sent by sending a timing advanced instruction. However, it is not possible for the ISAC base station to control the moment at which the signal is sent for the sensing signal reflected by the target. Therefore, the sensing signal and the communication signal arriving at the ISAC node tends to be asynchronous, and they interfere with each other, thus posing an adverse impact on the communication and sensing performance.

### SUMMARY

Provided are a method for signal transmission, a method for signal reception, a communication node, and a storage medium in some embodiments of the present disclosure.

An embodiment of the present disclosure provides a method for signal reception, which is applied to a first node, the method includes, transmitting indication information that is indicative of a preset resource set for transmitting a sensing signal and timing advanced information corresponding to the preset resource; and receiving the sensing signal, and a first communication signal sent by a second node.

An embodiment of the present disclosure discloses a method for method for signal transmission, which is applied to a second node, the method includes, receiving indication information that is indicative of a preset resource set for transmitting a sensing signal and timing advanced information corresponding to the preset resource; and transmitting a first communication signal to a first node according to the indication information.

An embodiment of the present disclosure provides a method for signal transmission, which is applied to a third node, the method includes, receiving indication information that is indicative of a preset resource set for transmitting a sensing signal and timing advanced information corresponding to the preset resource; and transmitting a sensing signal to the first node according to the indication information.

An embodiment of the present disclosure provides a method for signal transmission, which is applied to a first node, the method includes, receiving a sensing signal; determining an amount of timing advance for transmitting a second communication signal according to resources for transmitting the sensing signal; and transmitting the second communication signal according to the amount of timing advance for transmitting the third communication signal.

An embodiment of the present disclosure provides a method for signal transmission, which is applied to a third node, the method includes, transmitting a sensing signal; determining an amount of timing advance for transmitting a third communication signal according to resources for transmitting the sensing signal; and transmitting the third communication signal according to the amount of timing advance for transmitting the third communication signal.

An embodiment of the present disclosure provides a communication node, which includes a memory, a processor, and a computer program stored in the memory and executable on the processor which, when executed by the processor, causes the processor to carry out the method for signal reception or the method for signal reception as described above.

An embodiment of the present disclosure provides a computer-readable storage medium having stored thereon a computer program which, when executed by a processor, causes the processor to carry out the method for signal reception or the method for signal reception as described above.

### BRIEF DESCRIPTION OF DRAWINGS

FIG. 1 depicts a flowchart showing a method for signal reception according to an embodiment;
FIG. 2 depicts a schematic diagram showing a system for the transmission of a sensing signal and a communication signal according to an embodiment;
FIG. 3 depicts a flowchart showing a method for signal transmission according to an embodiment;
FIG. 4 depicts a flowchart showing a method for signal transmission according to another embodiment;
FIG. 5 depicts a flowchart showing a method for signal transmission according to yet another embodiment;
FIG. 6 depicts a flowchart showing a method for signal transmission according to yet another embodiment;
FIG. 7 depicts a schematic diagram showing a device for signal reception according to an embodiment;
FIG. 8 depicts a schematic diagram showing a device for signal transmission according to an embodiment;
FIG. 9 depicts a schematic diagram showing a device for signal transmission according to another embodiment;
FIG. 10 depicts a schematic diagram showing a device for signal transmission according to yet another embodiment;
FIG. 11 depicts a schematic diagram showing a device for signal transmission according to yet another embodiment; and
FIG. 12 depicts a schematic diagram showing the hardware structure of a communication node according to an embodiment.

### DETAILED DESCRIPTION

The present disclosure will be illustrated below with reference to the accompanying drawings and embodiments. It should be understood that the embodiments described herein are illustrative but not limiting to the present disclosure. It should be noted that various embodiments in the present disclosure and the features in the embodiments can be combined with each other without conflict. In addition, it should be noted that, for the convenience of description, only some parts related to this application instead of the entire structures are shown in the drawings.

An embodiment of the application provides a method for signal reception, which is applied to a first node. The first node can be an integrated sensing and communication (ISAC) node with communication and sensing functions.

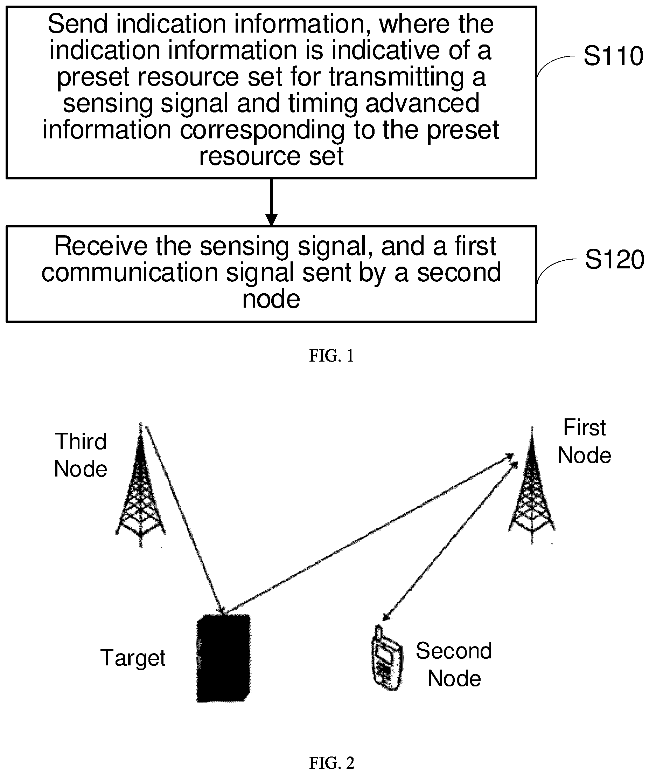

FIG. 1 depicts a flowchart showing a method for signal reception according to an embodiment. As shown in FIG. 1, the method according to this embodiment includes operations 110 and 120.

At operation 110, indication information is sent, where the indication information is indicative of a preset resource set for transmitting a sensing signal and timing advanced information corresponding to the preset resource set.

At operation 120, the sensing signal, and a first communication signal sent by a second node are received.

In this embodiment, the first node sends the indication information to the second node, to instruct the second node to send the first communication signal to the first node on the basis of having learned the preset resource set for transmitting the sensing signal and the corresponding timing advanced information. As such, the interference between the first communication signal and the sensing signal is thus reduced. The first node may also send indication information to a third node to indicate the resource for transmitting the sensing signal and timing advanced information to the third node, so as to reduce the interference between the sensing signal and the first communication signal. On this basis, the first node can receive the sensing signal sent by the third node and the first communication signal sent by the second node. The sensing signal and the first communication signal are synchronized at the first node. And the mutual interference between the sensing signal and the first communication signal is greatly reduced or even avoided.

FIG. 2 depicts a schematic diagram showing a system for the transmission of a sensing signal and a communication signal according to an embodiment. As shown in FIG. 2, during sensing, the first node and the third node shall operate cooperatively. For example, the third node sends a sensing signal. The sensing signal, after being reflected by an object, is then received by the first node. In particular, the first node and the third node may be different antennas or antenna panels that are deployed in a distributed manner within the same base station. Alternatively, the first node and the third node may be different base stations with cooperative transmission and reception, such base stations are integrated with communication and sensing functions, i.e., integrated sensing and communication, (ISAC) base stations. It is assumed that the first node will not send a communication signal on the same time-frequency resources as those for the transmission of the sensing signal at least during the reception of the sensing signal, so as to avoid the same-frequency interference of the sent communication signal to the sensing signal. Based on this assumption, the above node can achieve the sensing of the targets around without relying on the full-duplex technique.

The second node may be a communicating terminal device and may send the first communication signal to the first node.

The target belongs to an object that is unable to send or receive communication signals according to the instructions of the first node, such as a building that may directly reflect some sensing signals sent by the third node to the first node. In another example, the target may respond to the sensing signal through its own special geometric structure or material structure design that encodes the properties or state information of the target itself and change the reflection or absorption characteristics of electromagnetic waves. For instance, the target performs backscatter communication modulation according to the sensing signal sent by the third node. In another example the target is a terminal device that does not access the network of the first node.

In this embodiment, the third node sends the sensing signal on the preset resource set. The first node determines the timing advanced information corresponding to the sensing signal according to the relationship between the resource for sending the sensing signal and the preset resource set. The first node sends the preset resource set for transmitting the sensing signal and the corresponding timing advanced information to other nodes, which can avoid the conflict between the sensing signal and communication signal sent by different nodes and reduce interference. As such the performance and reliability of communication and sensing are improved.

In an embodiment, the indication information is sent to the second node. The first communication signal is transmitted through the resources in the preset resource set. And the amount of timing advance corresponding to the first communication signal is determined by the second node based on the timing advanced information.

In this embodiment, the second node can receive the indication information and send the first communication signal by adopting the corresponding timing advanced mechanism according to the preset resource set sent by the first node and the timing advanced information corresponding to the preset resource set.

In an example where the sensing signal is sent on a preset resource set, the first node typically sends the preset resource set and the timing advanced information corresponding to the preset resource set via broadcasting or multicasting. If the second node sends the first communication signal
by means of the resources of the preset resource set as described above (including part of the resources), it is necessary to determine the amount of timing advance for sending the first communication signal according to the timing advanced information corresponding to the preset resource set, to avoid interference between the sensing signal and the first communication signal. For example, the preset resource set is time slot 1 and time slot 2, and the second node sends the first communication signal over time slot 2 and time slot 3. For the first communication signal to be sent over time slot 2, the second node shall determine the amount of timing advance for sending the first communication signal according to the timing advanced information corresponding to the preset resource set. And it is not necessary to consider the timing advanced information for the first communication signal transmitted over time slot 3.

According to the method described in this embodiment, the first node configures and indicates the preset resource set of the sensing signal and the timing advanced information corresponding to the preset resource set, so that the amount of timing advance for the first communication signal sent by the second node over the preset resource set can ensure synchronization with the sensing signal at the first node. Thereby the mutual interference between the communication signal and the sensing signal can be significantly reduced or even avoided. It should be noted that although the sensing signal and the first communication signal are both sent on a preset resource set, such as the same time slot, the frequency domain resources the two signals occupy can be orthogonal. And thus, the timing of the second node for sending the first communication signal on the preset resource set can be synchronized with the sensing signal at the first node, and the mutual interference between both signals can be avoided.

In an embodiment, the preset resource set includes at least one of the following resources: time domain resources; frequency domain resources; spatial domain resources; or code domain resources. For example, the indication information includes at least time domain resource information for sending the sensing signal, and may further include one or more of, frequency domain resource information, spatial domain resource information, code domain resource information, etc.

In an embodiment, the indication information is sent via broadcast or multicast. In this embodiment, the indication information is sent by the first node and/or the third node via broadcast or multicast.

In an embodiment, the amount of timing advance corresponding to the timing advanced information is reversed with respect to the dedicated amount of timing advance of the first communication signal. For example, the amount of timing advance corresponding to the timing advance information indicates a delay by several sampling points, while the dedicated amount of timing advance indicates an advance by several sampling points.

In an embodiment, the method further includes the following operations. At operation 100, dynamic indication information is sent, where the dynamic indication information is configured to instruct the second node to: determine the amount of timing advance corresponding to the first communication signal according to the timing advanced information; or determine the amount of timing advance corresponding to the first communication signal according to the dedicated amount of timing advance of the first communication signal; or determine the amount of timing advance corresponding to the first communication signal according to the timing advanced information, and the dedicated amount of timing advance of the first communication signal.

In this embodiment, the second node decides according to the dynamic indication of the first node as to whether to determine the amount of timing advance for sending the first communication signal based on the relationship between the resources for sending the first communication signal, and the preset resource set. For example, the first node sends the preset resource set and the timing advanced information corresponding to the preset resource set, and the above information is typically sent via broadcast or multicast. For the second node that sends signals over the resources (including partial resources) of the preset resource set, the first node sends an instruction instructing whether to determine the amount of timing advance by means of the timing advanced information corresponding to the preset resource set. The second node decides according to the instruction whether to determine the amount of timing advance for sending the first communication signal by means of the timing advanced information corresponding to the preset resource set. The dynamic indication information may also direct the second node whether to determine the amount of timing advance for transmitting the first communication signal according to the dedicated amount of timing advance. The amount of timing advance for sending the first communication signal can be determined according to the timing advanced information corresponding to the preset resource set and/or the dedicated amount of timing advance.

In an embodiment, the dynamic indication information is sent through dedicated signaling for the second node. In this embodiment, the dynamic indication information is sent through dedicated signaling for the second node. For example, scrambling is performed with the specific identification number of the second node, such as the cell-radio network temporary identifier (C-RNTI) of the second node in the control channel or service channel for transmitting the instruction.

In an embodiment, the dynamic indication information is sent via broadcast or multicast. In this embodiment, the dynamic indication information is sent via broadcast or multicast. For example, scrambling is performed with a broadcast-related identification number or a multicast identification number related to the second node in the control channel or service channel for transmitting the instruction.

It should be noted that the preset resource set is the resource set occupied by the transmission of the sensing signal, but the business demands are time-varying, so the sensing signal may not be sent over the preset resource set during some time periods. By means of the method of this embodiment, the first node can flexibly and dynamically control the selection as to whether the second node adopts the timing advanced information corresponding to the preset resource set through dedicated signaling or broadcast/multicast signaling, so as to improve the utilization efficiency of wireless resources while ensuring the sensing performance.

In an embodiment, the indication information is sent to the third node. The timing advanced information is determined according to the amount of timing advance corresponding to the first communication signal.

In this embodiment, the first node can send indication information to the third node to indicate the preset resource set for sending the sensing signal and the corresponding timing advanced information. Before that, the first node can pre-determine the preset resource set and the corresponding timing advanced information available for sending the sensing signal by the third node, according to the resources and amount of timing advance for the first communication signal sent by the third node, to avoid interference.

In an embodiment, the method further includes operation 120. At operation 120, priority is given to a reception of the first communication signal in response to a conflict between the sensing signal and the first communication signal. In this embodiment, when the sensing signal sent by the third node over the preset resource set conflicts with the first communication signal sent by the second node, the first node gives priority to the reception of the first communication signal sent by the second node to ensure the reliability of data communication at the first place.

An embodiment of the present disclosure further provides a method for signal transmission, which is applied to a second node. The second node can be a terminal device and can send a first communication signal to a first node. It should be noted that technical details not described in detail in this embodiment can be found in any of the above embodiments.

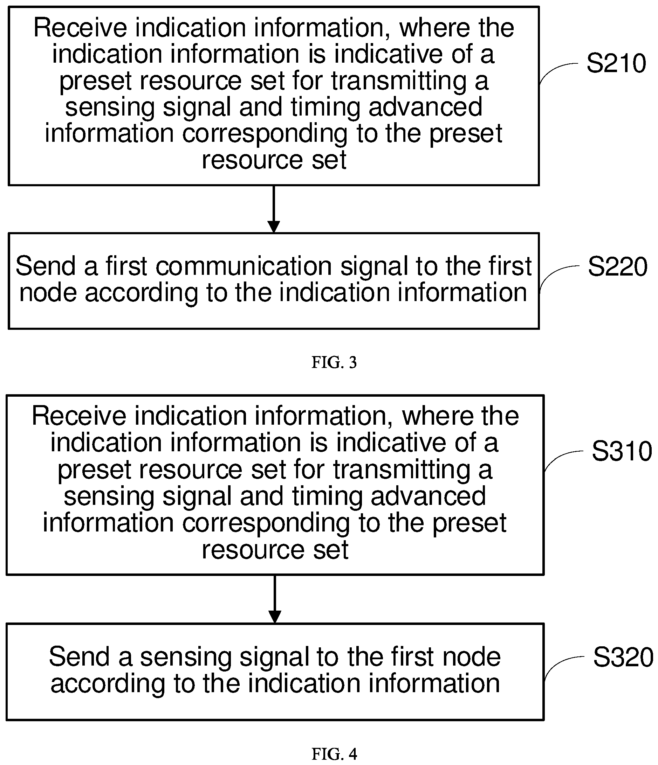

FIG. 3 depicts a flowchart showing a method for signal transmission according to an embodiment. As shown in FIG. 3, the method includes operations 210 and 220.

At operation 210, indication information is received, where the indication information is indicative of a preset resource set for transmitting a sensing signal and timing advanced information corresponding to the preset resource set.

At operation 220, a first communication signal is sent to the first node according to the indication information.

In this embodiment, when the second node receives the indication information, the second node can learn the preset resource set for sending the sensing signal and the corresponding timing advanced information, and accordingly send the first communication signal to the first node. As such, the conflict between the first communication signal and the sensing signal can be avoided and the performance and reliability of communication and sensing can be improved.

In an embodiment, operations 220 includes the following sub-operations.

At operation 2210, the amount of timing advance corresponding to the first communication signal is determined according to the indication information.

At operation 2220, the first communication signal is sent to the first node according to the amount of timing advance corresponding to the first communication signal.

In this embodiment, the second node sends the first communication signal according to the preset resource set and the timing advanced information corresponding to the preset resource set, by means of the corresponding timing advanced mechanism. When the resources for sending the first communication signal conflict with those in the preset resource set, the conflict between the sensing signal and the first communication signal can be reduced by determining the amount of timing advance for sending the first communication signal.

In an embodiment, the method further includes the following operations.

At operation 200, dynamic indication information sent by the first node is received, where the dynamic indication information is configured to instruct the second node to: determine the amount of timing advance corresponding to the first communication signal according to the timing advanced information; or determine the amount of timing advance corresponding to the first communication signal according to the dedicated amount of timing advance of the first communication signal; or determine the amount of timing advance corresponding to the first communication signal according to the timing advanced information, and the dedicated amount of timing advance of the first communication signal.

In this embodiment, the resources occupied by the first communication signal sent by the second node conflict with the preset set of resources. The dynamic indication information can be configured to instruct the second node to determine the amount of timing advance for sending the first communication signal according to the timing advanced information, during the transmission of the first communication signal. Alternatively, the dynamic indication information can be configured to instruct the second node not to determine the amount of timing advance corresponding to the first communication signal according to the timing advanced information. In this case, the second node can determine the amount of timing advance corresponding to the first communication signal according to the dedicated amount of timing advance that is sent to the second node through dedicated control information in advance. In addition, if the resources occupied by the second node for sending the first communication signal do not conflict with the preset resource set, the final amount of timing advance can be determined according to the traditional way, for example, according to the dedicated amount of timing advance.

In an embodiment, operations 2210 includes the following sub-operations.

The amount of timing advance corresponding to the first communication signal is determined according to the timing advanced information in response to a conflict between the resources occupied by the first communication signal and the preset resource set.

For example, the second node sends a random-access preamble over the resource that conflicts with the preset resource set. In this case, the second node determines the amount of timing advance for the random-access preamble according to the timing advanced information.

In an embodiment, operations 2210 includes the following sub-operations.

The amount of timing advance corresponding to the first communication signal is determined according to the timing advanced information and the dedicated amount of timing advance of the first communication signal, in response to a conflict between the resources occupied by the first communication signal and the preset resource set.

For example, the second node sends uplink service data or uplink measurement pilot over resources that conflict with the preset resource set. In this case, the second node can determine the final amount of timing advance for sending the first communication signal according to both the dedicated amount of timing advance and the previous timing advanced information. Assuming that the dedicated amount of timing advance is to send the first communication signal 10 sampling points in advance and the timing advanced information at the broadcast or multicast level is to send the first communication signal 4 sampling points later, then the final amount of timing advance for sending the first communication signal by the second node equals 10-4=6.

In an embodiment, operations 2210 includes the following sub-operations.

The amount of timing advance corresponding to the first communication signal is determined according to the dedicated amount of timing advance of the first communication signal, in response to an absence of a conflict between the resources occupied by the first communication signal and the preset resource set.

In this embodiment, when the second node sends the first communication signal, the second node can take the dedicated amount of timing advance as the final amount of timing advance.

In an embodiment, the indication information is sent by the first node or the third node via broadcast or multicast.

In an embodiment, the amount of timing advance corresponding to the timing advanced information is reversed with respect to the dedicated amount of timing advance of the first communication signal.

In the method of this embodiment, the second node can flexibly determine the final amount of timing advance according to the dynamic indication information, by means of the timing advanced information and/or the dedicated amount of timing advance, and send the first communication signal accordingly. Thereby, the interference between the first communication signal and the sensing signal is reduced and the utilization efficiency of wireless resources is improved while the sensing performance is ensured.

An embodiment of the present disclosure provides a method for signal transmission, which is applied to a third node. The third node is a node that sends a sensing signal, such as a base station with a sensing function. It should be noted that technical details not described in detail in this embodiment can be found in any of the above embodiments.

FIG. 4 depicts a flowchart showing a method for signal transmission according to another embodiment. As shown in FIG. 4, the method includes operations 310 and 320.

At operation 310, indication information is received, where the indication information is indicative of a preset resource set for transmitting a sensing signal and timing advanced information corresponding to the preset resource set.

At operation 320, a sensing signal is sent to the first node according to the indication information.

In this embodiment, the first node sends a preset resource set and timing advanced information corresponding to the preset resource set to the third node. The preset resource set and timing advanced information corresponding to the preset resource set can be determined by the first node according to the resources and amount of timing advance of the first communication signal sent by the second node served by the first node. In addition, the first node can further send a preset resource set and the beam, power and/or time-frequency resources corresponding to the sensing signal in the preset resource set. The third node receives the indication information and sends the sensing signal according to the corresponding timing advanced information over the preset resource set, so as to reduce the interference with the first communication signal and improve the performance and reliability of communication and sensing.

In an embodiment, the timing advanced information is determined according to the amount of timing advance corresponding to the first communication signal sent by the second node.

In this embodiment, the first node can achieve the synchronization between the sensing signal sent by the third node and the first communication signal sent by the second node at the first node by adjusting the timing advance of the sensing signal sent by the third node. The backward compatibility of the system is ensured to the greatest extent on the premise of reducing the mutual interference of the second node and the third node, and without adverse impact on the process of sending the first communication signal by the second node itself.

An embodiment of the application further provides a method for signal transmission, which is applied to a first node. The first node can be an ISAC node with communication and sensing functions. It should be noted that technical details not described in detail in this embodiment can be found in any of the above embodiments.

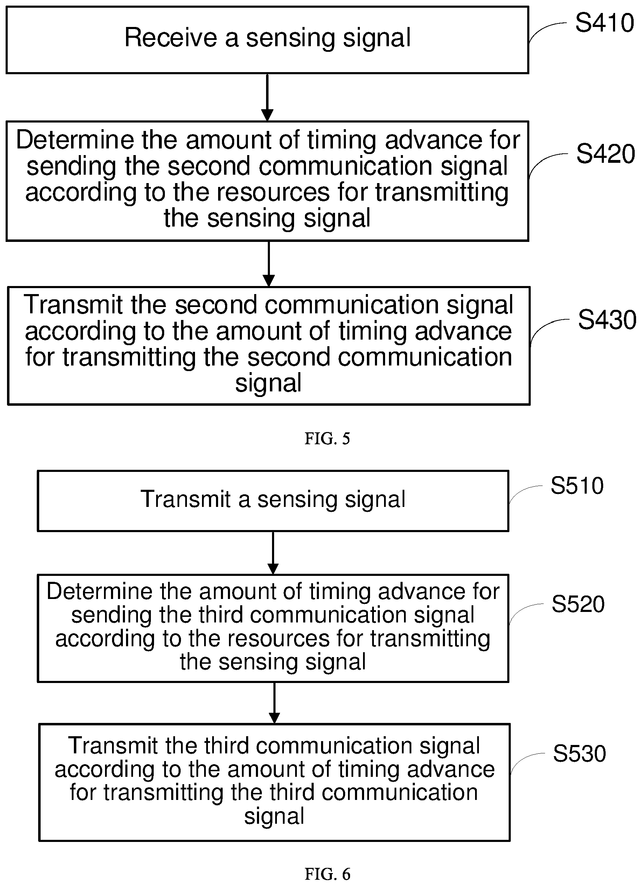

FIG. 5 depicts a flowchart showing a method for signal transmission according to an embodiment. As shown in FIG. 5, the method operations 410, 420, and 430.

At operation 410, a sensing signal is received.

At operation 420, the amount of timing advance for sending the second communication signal is determined according to the resources for transmitting the sensing signal.

At operation 430, the second communication signal is transmitted according to the amount of timing advance for transmitting the second communication signal.

In this embodiment, the second communication signal refers to the communication signal sent by the first node to another node. The amount of timing advance for sending the second communication signal is determined according to the resources of the sensing signal. That is, the first node adjusts the amount of timing advance for sending the communication signal by itself according to the resources of transmitting the sensing signal, thereby reducing the interference between the sensing signal and the communication signal at the first node and improving the performance and reliability of communication and sensing.

In an embodiment, the sensing signal is transmitted over K consecutive symbols in a time slot. When K is less than M, the amount of timing advance for sending the second communication signal satisfies the following constraints, the second communication signal is prevented from being sent over the symbol conflicting with the sensing signal and having the symbol index within the range of [K₁+Δ, Kₖ+Δ] in this time slot, where Δ is a positive integer less than or equal to M-K, K₁ is the index of the starting symbol in the K consecutive symbols, and Kₖ is the index of the ending symbol in the K consecutive symbols.

In an embodiment, the sensing signal is transmitted over consecutive K symbols in a time slot. The amount of timing advance for sending the second communication signal satisfies the following constraints: when K is equal to M, the second communication signal is prevented from being sent over the symbol conflicting with the sensing signal and having the symbol index within the range of [K₁+Δ, M] in this time slot and having the symbol index within the range of [0, Δ] in the subsequent time slot, where Δ is a positive integer less than or equal to M-K, K₁ is the index of the starting symbol in the consecutive K symbols, and M is the total number of symbols in this time slot.

In this embodiment, the sensing signal is sent over a preset resource set. The indication information sent by the first node includes the preset resource set and the timing advanced information corresponding to the preset resource set, and the above information is typically sent via broadcast or multicast. The indication information sent by the first node may include time domain resource information for sending the sensing signal. The time domain resource information may be the time slot over which the sensing signal is sent and the time domain symbol information within the time slot. Suppose that a time slot includes M symbols with indexes of 1, 2 ... M respectively. The sensing signal sent by the third node will be sent over at least K consecutive symbols in one time slot (1≤K≤M). Suppose that the sensing signal is sent over k consecutive symbols of time slot n, and the indexes of these K symbols in the time slot are K₁, K₂,...K_{K}.

If K_{K}<M (or k < m), (K_{K}+Δ) < = m is required, where Δ is an integer not less than 0 and not greater than (M-K_{K}). The first node is prevented from sending the second communication signal at least over the resources that conflict with the received sensing signal within the symbol index set [K₁+Δ, K_{K}+Δ] of time slot n.

In the case of K_{K}=M, the first node is prevented from sending the second communication signal over the resources that conflict with the received sensing signal at least in the symbol index set [K₁+Δ, M] of time slot n and the symbol index set [0, Δ] of time slot (n+1).

On this basis, it can be ensured that the first node can avoid co-frequency interference caused by echo and radio frequency leakage of its own communication signal when receiving the sensing signal sent by the third node, thus ensuring the sensing performance of the sensing signal.

An embodiment of the present disclosure further provides a method for signal transmission, which is applied to a third node. The third node is a node that sends sensing signals, such as a base station with a sensing function, and the third node also has a communication function. In this case, the third node is also equivalent to the first node, i.e., an ISAC node. It should be noted that technical details not described in detail in this embodiment can be found in any of the above embodiments.

FIG. 6 depicts a flowchart showing a method for signal transmission according to another embodiment. As shown in FIG. 6, the method includes operations 510, 520, and 530.

At operation 510, a sensing signal is transmitted.

At operation 520, the amount of timing advance for sending the third communication signal is determined according to the resources for transmitting the sensing signal.

At operation 530, the third communication signal is transmitted according to the amount of timing advance for transmitting the third communication signal.

In this embodiment, the third communication signal refers to the communication signal sent by the third node to another node. The amount of timing advance for sending the third communication signal is determined according to the resources of the sensing signal. That is, the third node adjusts the amount of timing advance for sending the communication signal by itself according to the resources of transmitting the sensing signal, thereby avoiding the interference and conflict between the sensing signal and the communication signal and improving the performance and reliability of communication and sensing.

In an embodiment, the sensing signal is transmitted over K consecutive symbols in a time slot. The amount of timing advance for sending the third communication signal satisfies the following constraints, when K₁ is greater than 1, the third communication signal is prevented from being sent over the symbol conflicting with the sensing signal and having the symbol index within the range of [K₁-Δ, Kₖ-Δ] in this time slot; where K₁ is the index of the starting symbol in the K consecutive symbols, Kₖ is the index of the ending symbol in the K consecutive symbols, and Δ is a positive integer less than or equal to K₁.

In an embodiment, the sensing signal is transmitted over K consecutive symbols in a time slot. The amount of timing advance for sending the third communication signal satisfies the following constraints: when K₁ is equal to 1, the third communication signal is prevented from being sent over the symbols conflicting with the sensing signal in the preceding time slot and having the symbol index within the range of [M-Δ, M], where Δ is a positive integer less than or equal to Ki, and M is the total number of symbols in the time slot.

In this embodiment, the sensing signal is sent over a preset resource set. The indication information sent by the first node includes the preset resource set and the timing advanced information corresponding to the preset resource set, and which may include the time domain resource information for sending the sensing signal. The time domain resource information may be the time slot over which the sensing signal is sent and the time domain symbol information within the time slot. Suppose that a time slot includes M symbols with indexes of 1, 2 ... M respectively. The sensing signal sent by the third node will be sent over at least K consecutive symbols in one time slot (1≤K≤M). Suppose that the sensing signal is sent over k consecutive symbols of time slot n, and the indexes of these k symbols in the time slot are K₁, K₂,...K_{K}.

When K₁>1, (K1-Δ) ≥ 1 is required, where Δ is an integer greater than 0 and not greater than K₁. The third node is prevented from transmitting other communication signals except the sensing signal at least over the resources that conflict with the sensing signal within the symbol index set [K₁-Δ, K_{K}-Δ] of time slot n.

When Ki=1, the third node is prevented from transmitting other communication signals except the sensing signal at least over the resources that conflict with the sensing signal in the symbol index set [M-Δ, M] of the time slot (n-1).

By means of the above scheme, the third node adjusts its strategy of sending the communication signal according to the position at which the sensing signal is sent by itself, which can ensure that when the first node receives the sensing signal sent by the third node, the co-frequency interference caused by the echo of the communication signal received by the first node and radio frequency leakage is avoided, thus ensuring the sensing performance of the sensing signals.

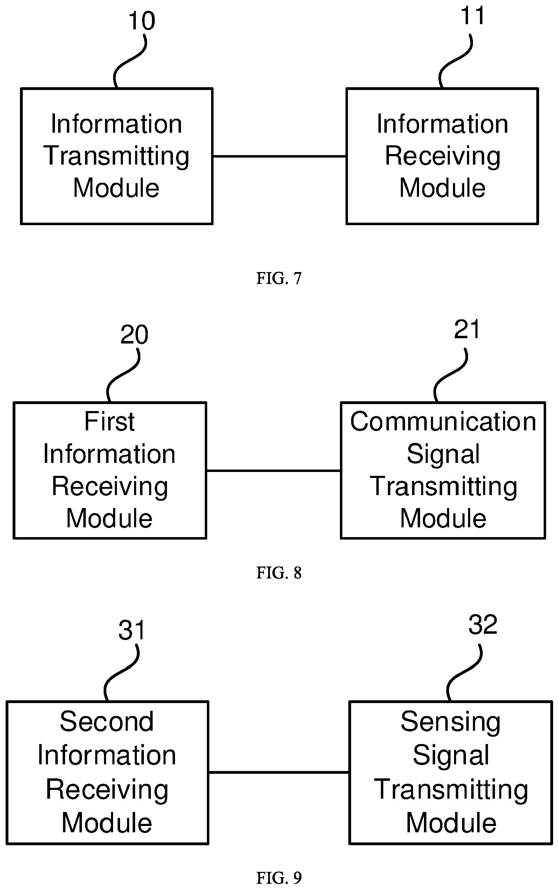

An embodiment of the present disclosure further provides a device for signal reception. FIG. 7 depicts a schematic diagram showing a device for signal reception according to an embodiment. As shown in FIG. 7, the device includes the following modules.

An information sending module 11, which is configured to send indication information that is indicative of a preset resource set for transmitting a sensing signal and timing advanced information corresponding to the preset resource set.

A signal receiving module 12, which is configured to receive the sensing signal, and a first communication signal sent by the second node.

The device for signal reception according to this embodiment can avoid the conflict between the sensing signal and communication signal sent by different nodes and reduce interference, by transmitting the sensing signal and the corresponding timing advanced information to another node. As such the performance and reliability of communication and sensing are improved.

In an embodiment, the indication information is sent to the second node. The first communication signal is transmitted through the resources in the preset resource set. And the amount of timing advance corresponding to the first communication signal is determined by the second node based on the timing advanced information.

In an embodiment, the preset resource set includes at least one of the following resources: time domain resources; frequency domain resources; spatial domain resources; or code domain resources.

In an embodiment, the indication information is sent via broadcast or multicast.

In an embodiment, the amount of timing advance corresponding to the timing advanced information is reversed with respect to the dedicated amount of timing advance of the first communication signal.

In an embodiment, the device further includes the following modules.

A dynamic indication module, which is configured to send dynamic indication information, where the dynamic indication information is configured to instruct the second node to: determine the amount of timing advance corresponding to the first communication signal according to the timing advanced information; or determine the amount of timing advance corresponding to the first communication signal according to the dedicated amount of timing advance of the first communication signal; or determine the amount of timing advance corresponding to the first communication signal according to the timing advanced information, and the dedicated amount of timing advance of the first communication signal.

In an embodiment, the dynamic indication information is sent through dedicated signaling for the second node.

In an embodiment, the dynamic indication information is sent via broadcast or multicast.

In an embodiment, the indication information is sent to the third node. The timing advanced information is determined according to the amount of timing advance corresponding to the first communication signal.

In an embodiment, the signal receiving module 12 is configured to:
receive the first communication signal with priority in response to a conflict between the sensing signal and the first communication signal.

The device for signal reception proposed in this embodiment shares the same inventive concept as the method for signal reception proposed in the above embodiments. For technical details not described in detail in this embodiment, please refer to any of the above embodiments, and this embodiment can generate the same beneficial effects as those when the method for signal reception is carried out.

An embodiment of the present disclosure further provides a device for signal transmission. FIG. 8 depicts a schematic diagram showing a device for signal transmission according to an embodiment. As shown in FIG. 8, the device includes the following modules.

A first information receiving module 21, which is configured to receive indication information that is indicative of a preset resource set for transmitting a sensing signal and timing advanced information corresponding to the preset resource set.

A communication signal transmitting module 22, which is configured to transmit a first communication signal to the first node according to the indication information.

The device for signal transmission according to this embodiment, can learn the preset resource set for transmitting the sensing signal and the corresponding timing advanced information, and transmit the first communication signal accordingly, by receiving the indication information. Thereby, the conflict between the first communication signal and the sensing signal can be avoided, and the performance and reliability of communication and sensing can be improved.

In an embodiment, the communication signal transmitting module 22 is configured to:
determine an amount of timing advance corresponding to the first communication signal according to the indication information; and
transmit the first communication signal to the first node according to the amount of timing advance corresponding to the first communication signal.

In an embodiment, the device further includes the following modules.

A dynamic indication receiving module, which is configured to, receive dynamic indication information, where the dynamic indication information is configured to instruct the second node to: determine the amount of timing advance corresponding to the first communication signal according to the timing advanced information; or determine the amount of timing advance corresponding to the first communication signal according to the dedicated amount of timing advance of the first communication signal; or determine the amount of timing advance corresponding to the first communication signal according to the timing advanced information, and the dedicated amount of timing advance of the first communication signal.

In an embodiment, the determination of an amount of timing advance corresponding to the first communication signal according to the indication information includes,
determining the amount of timing advance corresponding to the first communication signal according to the timing advanced information in response to a presence of conflict between the resources occupied by the first communication signal and the preset resource set.

In an embodiment, the determination of an amount of timing advance corresponding to the first communication signal according to the indication information includes,
determining the amount of timing advance corresponding to the first communication signal according to the timing advanced information and the dedicated amount of timing advance of the first communication signal, in response to a conflict between the resources occupied by the first communication signal and the preset resource set.

In an embodiment, the determination of an amount of timing advance corresponding to the first communication signal according to the indication information includes,
determining the amount of timing advance corresponding to the first communication signal according to a dedicated amount of timing advance of the first communication signal, in response to an absence of conflict between the resources occupied by the first communication signal and the preset resource set.

In an embodiment, the indication information is sent by the first node or the third node via broadcast or multicast.

In an embodiment, the amount of timing advance corresponding to the timing advanced information is reversed with respect to the dedicated amount of timing advance of the first communication signal.

The device for signal transmission proposed in this embodiment shares the same inventive concept as the method for signal transmission proposed in the above embodiments. For technical details not described in detail in this embodiment, please refer to any of the above embodiments, and this embodiment can generate the same beneficial effects as those when the method for signal transmission is carried out.

An embodiment of the present disclosure further provides a device for signal transmission. FIG. 9 depicts a schematic diagram showing a device for signal transmission according to another embodiment; As shown in FIG. 9, the device includes the following modules.

A second information receiving module 31, which is configured to receive indication information that is indicative of a preset resource set for transmitting a sensing signal and timing advanced information corresponding to the preset resource set.

The sensing signal transmitting module 32 is configured to transmit the sensing signal to the first node according to the indication information.

The device for signal transmission according to this embodiment, can avoid interference and conflict with the communication signal and improve the performance and reliability of communication and sensing, by receiving the indication information and transmitting the sensing signal according to the corresponding timing advanced information over the preset resource set.

In an embodiment, the timing advanced information is determined according to the amount of timing advance corresponding to the first communication signal sent by the second node.

The device for signal transmission proposed in this embodiment shares the same inventive concept as the method for signal transmission proposed in the above embodiments. For technical details not described in detail in this embodiment, please refer to any of the above embodiments, and this embodiment can generate the same beneficial effects as those when the method for signal transmission is carried out.

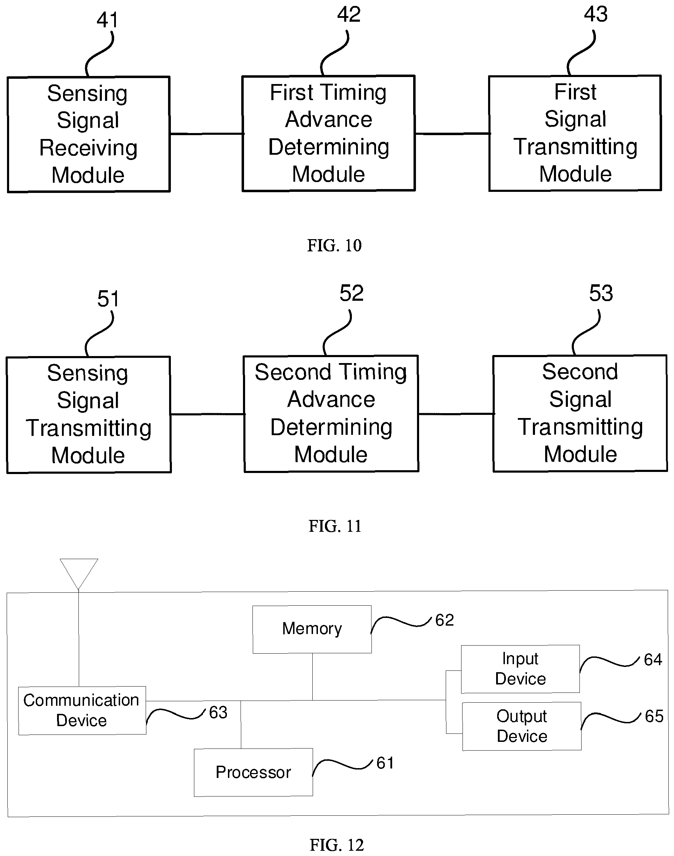

An embodiment of the present disclosure further provides a device for signal transmission. FIG. 10 depicts a schematic diagram showing a device for signal transmission according to yet another embodiment. As shown in FIG. 10, the device includes the following modules.

A sensing signal receiving module 41, which is configured to receive the sensing signal.

A first timing advance determining module 42, which is configured to determine the amount of timing advance for sending the second communication signal according to the resources for transmitting the sensing signal.

A first signal sending module 43, which is configured to send the second communication signal according to the amount of timing advance for sending the second communication signal.

The device for signal transmission according to this embodiment, can avoid the interference and conflict between the sensing signals and the communication signals at the first node, and improve the performance and reliability of communication and sensing, by adjusting the amount of timing advance for transmitting communication signals by itself according to the resources for transmitting the sensing signals.

In an embodiment, the sensing signal is transmitted over K consecutive symbols in a time slot;

The timing advance for sending the second communication signal satisfies:
When K is less than M, the second communication signal is prevented from being transmitted over a symbol conflicting with the sensing signal, and having a symbol index within a range of [K1+Δ, Kk+Δ] in the time slot; where Δ is a positive integer less than or equal to M-K, K1 is an index of a starting symbol in the K consecutive symbols, and Kk is an index of an ending symbol in the K consecutive symbols.

In an embodiment, the sensing signal is transmitted over K consecutive symbols in a time slot;

The timing advance for sending the second communication signal satisfies:
When K is equal to M, the second communication signal is prevented from being transmitted over a symbol conflicting with the sensing signal, and having a symbol index within a range of [K1+Δ, M] in the time slot and having a symbol index within a range of [0, Δ] in a subsequent time slot to the time slot; where Δ is a positive integer less than or equal to M-K, K1 is an index of a starting symbol in the K consecutive symbols, and M is a total number of symbols in the time slot.

The device for signal transmission proposed in this embodiment shares the same inventive concept as the method for signal transmission proposed in the above embodiments. For technical details not described in detail in this embodiment, please refer to any of the above embodiments, and this embodiment can generate the same beneficial effects as those when the method for signal transmission is carried out.

An embodiment of the present disclosure further provides a device for signal transmission. FIG. 11 depicts a schematic diagram showing a device for signal transmission according to yet another embodiment. As shown in FIG. 11, the device includes the following modules.

A sensing signal transmitting module 51, which is configured to transmit a sensing signal.

A second timing advance determining module 52, which is configured to determine the amount of timing advance for sending the third communication signal according to the resources for transmitting the sensing signal.

A second signal transmitting module 53, which is configured to send the third communication signal according to the amount of timing advance for sending the third communication signal.

The device for signal transmission according to this embodiment, can avoid the interference and conflict between the sensing signals and the communication signals and improve the performance and reliability of communication and sensing, by adjusting its strategy for transmitting the communication signal according to the resources for transmitting the sensing signal sent by itself.

In an embodiment, the sensing signal is transmitted over K consecutive symbols in a time slot. An amount of timing advance for transmitting the third communication signal satisfies: when K₁ is greater than 1, the third communication signal is prevented from being transmitted over a symbol conflicting with the sensing signal and having a symbol index within a range of [K₁-Δ, Kₖ-Δ] in the time slot; where K₁ is an index of a starting symbol in the K consecutive symbols, Kₖ is an index of an ending symbol in the K consecutive symbols, and Δ is a positive integer less than or equal to K₁.

In an embodiment, the sensing signal is transmitted over K consecutive symbols in a time slot;

An amount of timing advance for transmitting the third communication signal satisfies:
in response to a determination that K1 is equal to 1, the third communication signal is prevented from being transmitted over a symbol conflicting with the sensing signal, and having a symbol index within a range of [M-Δ, M] in a preceding time slot; where Δ is a positive integer less than or equal to Ki, and M is a total number of symbols in the time slot.

The device for signal transmission proposed in this embodiment shares the same inventive concept as the method for signal transmission proposed in the above embodiments. For technical details not described in detail in this embodiment, please refer to any of the above embodiments, and this embodiment can generate the same beneficial effects as those when the method for signal transmission is carried out.

An embodiment of the present disclosure further provides a communication node. FIG. 12 depicts a schematic diagram showing the hardware structure of a communication node according to an embodiment. As shown in FIG. 12, the communication node includes a memory 62, a processor 61, and a computer program stored in the memory and executable by the processor which, when executed by the processor, causes the processor to carry out the method for signal reception/transmission in any one of the embodiments as described above.

The communication node may also include a memory 62. One or more processor 61 may be provided in the communication node while one processor 61 is shown in FIG. 12 by way of an example. Memory 62 is configured to store one or more programs which, when executed by the one or more processors 61, cause the processors 61 to carry out the method for signal reception/transmission according to an embodiment of the present disclosure.

The communication node further includes a communication device 63, an input device 64, and an output device 65.

The processor 61, the memory 62, the communication device 63, the input device 64, and the output device 65 in the communication node can be connected by a bus or other means. FIG. 12 shows the connection of a bus by way of an example.

The input device 64 may be configured to receive input numeric or character information and generate key signal input related to user settings and function control of the communication node. The output device 65 may include a display device such as a screen.

The communication device 63 may include a receiver and a transmitter. The communication device 63 is configured to receive and transmit information for communication under the control of the processor 61.

As a computer-readable storage medium, the memory 62 can be configured to store software programs, computer-executable programs, and modules, such as program instructions/modules corresponding to the method for signal reception described in an embodiment of the present disclosure (for example, the information transmitting module 10 and the signal receiving module 11 in the device for signal reception). Memory 62 may include a program storage section and a data storage section, in which the program storage section may store an operating system and application programs for performing at least one operation, and the data storage section may store data created according to the operation of the communication node, or the like. In addition, the memory 62 can include high-speed random-access memory and nonvolatile memory, such as at least one disk memory device, a flash memory device, or other nonvolatile solid-state memory devices. In some implementations, the memory 62 may include memories remotely located relative to the processor 61, and these remote memories may be connected to a communication node through a network. Examples of the above networks include, but are not limited to, the Internet, intranet, local area network, mobile communication network, and combinations thereof.

An embodiment of the present disclosure further provides a storage medium storing a computer program which, when executed by a processor, causes the processor to carry out the method for signal reception/transmission in any one of the embodiments as described above.

The method for signal reception includes, transmitting indication information that is indicative of a preset resource set for transmitting a sensing signal and timing advanced information corresponding to the preset resource; and receiving the sensing signal, and a first communication signal sent by a second node.

The method for method for signal transmission includes, receiving indication information that is indicative of a preset resource set for transmitting a sensing signal and timing advanced information corresponding to the preset resource; and transmitting a first communication signal to a first node according to the indication information.

Alternatively, the method for signal transmission includes, receiving indication information that is indicative of a preset resource set for transmitting a sensing signal and timing advanced information corresponding to the preset resource; and transmitting a sensing signal to the first node according to the indication information.

Alternatively, the method for signal transmission includes, receiving a sensing signal; determining an amount of timing advance for transmitting a second communication signal according to resources for transmitting the sensing signal; and transmitting the second communication signal according to the amount of timing advance for transmitting the third communication signal.

Alternatively, the method for signal transmission includes, transmitting a sensing signal; determining an amount of timing advance for transmitting a third communication signal according to resources for transmitting the sensing signal; and transmitting the third communication signal according to the amount of timing advance for transmitting the third communication signal.

The computer storage medium according to an embodiment of the present disclosure may be any combination of one or more computer-readable medium. The computer-readable medium may be a computer-readable signal medium or a computer-readable storage medium. The computer-readable storage medium can be, for example, but not limited to: an electrical, magnetic, optical, electromagnetic, infrared, or semiconductor system, device or device, or any combination of the above. More specific examples (a non-exhaustive list) of computer-readable storage media include: an electrical connection with one or more wires, a portable computer diskette, a hard disk, a Random-Access Memory (RAM), Read Only Memory, ROM), erasable programmable read-only memory (EPROM), flash memory, optical fiber, portable CD-ROM, optical storage device, magnetic storage device, or any suitable combination of the above. A computer-readable storage medium can be any tangible medium containing or storing a program, which can be used by or in conjunction with an instruction execution system, apparatus, or device.

A computer-readable signal medium may include a signal carrying data propagated in a baseband or as part of a carrier wave, in which computer-readable program code is carried. This propagated data signal can take many forms, including but not limited to electromagnetic signals, optical signals, or any suitable combination of the above signals. The computer-readable signal medium may also be any computer-readable medium other than the computer-readable storage medium, which can send, propagate or transmit the program for use by or in conjunction with the instruction execution system, apparatus, or device.

The program code contained in the computer-readable medium can be transmitted by any suitable medium, including but not limited to wireless, wire, optical cable, Radio Frequency (RF), etc., or any suitable combination of the above.

Computer program codes for performing the operations of the present application can be written in one or more programming languages or their combinations, including object-oriented programming languages such as Java, Smalltalk, and C++, as well as conventional procedural programming languages such as "C" or similar programming languages. The program code can be completely executed on the user's computer, partially executed on the user's computer, executed as an independent software package, partially executed on the user's computer and partially executed on a remote computer, or completely executed on a remote computer or server. In the case a remote computer is involved, the remote computer can be connected to a user computer through any kind of network, including a local area network (LAN) or a wide area network (WAN), or can be connected to an external computer (for example, through the Internet using an Internet service provider).

Some embodiments are described above which are illustrative and are not intended to limit the present disclosure.

It should be understood by those having ordinary skills in the art that the term user equipment covers any suitable type of wireless user equipment, such as a mobile phone, a portable data processing device, a portable web browser, or a vehicle-mounted mobile station.

Generally, various embodiments of the present disclosure may be implemented as hardware or dedicated circuits, software, logic, or any suitable combination thereof. For example, some aspects may be implemented as hardware, while other aspects may be implemented as firmware or software executable by a controller, microprocessor, or other computing device, although the present disclosure is not limited thereto.

Some embodiments of the present disclosure can be implemented by a data processor of a mobile device executing computer program instructions, for example, in a processor entity, by hardware, or by a combination of software and hardware. Computer program instructions can be assembly instructions, instruction set architecture (ISA) instructions, machine instructions, machine-related instructions, microcode, firmware instructions, state setting data, or source code or object code written in any combination of one or more programming languages.

The block diagram of any logic flow in the drawings of the present disclosure may represent the program process, or may represent interconnected logic circuits, modules and functions, or may represent the combination of program process and logic circuits, modules, and functions. Computer programs can be stored in the memory. The memory can be of any type suitable for the local technical environment and can be realized with any suitable data storage technology, such as, but not limited to, read-only memory (ROM), random access memory (RAM), optical memory devices and systems, digital versatile disc (DVD), or compact disk (CD), etc. Computer-readable media may include non-transitory storage media. The data processor can be of any type suitable for the local technical environment, such as but not limited to a general-purpose computer, a special-purpose computer, a microprocessor, a digital signal processor (DSP), an application-specific integrated circuit (ASIC), a programmable logic device (FGPA) and a processor based on multi-core processor architecture.

Some embodiments of the present disclosure are illustrated above by way of non-limiting implementations. However, various modifications and alternations to the above embodiments are apparent to those having ordinary skills in the art when considering the drawings and claims, without departing from the scope of the present disclosure. Therefore, the proper scope of the present disclosure should be defined by claims.

## Claims

1. A method for signal reception, which is applied to a first node, the method comprising,
transmitting indication information that is indicative of a preset resource set for transmitting a sensing signal, and timing advanced information corresponding to the preset resource set; and
receiving the sensing signal, and a first communication signal sent by a second node.

2. The method according to claim 1, wherein the indication information is sent to the second node; and the first communication signal is transmitted through resources in the preset resource set, and an amount of timing advance corresponding to the first communication signal is determined by the second node based on the timing advanced information .

3. The method according to claim 1, wherein the preset resource set comprises at least one of following resources,
time domain resources, frequency domain resources, spatial domain resources, or code domain resources.

4. The method according to claim 1, wherein the indication information is transmitted via broadcast or multicast.

5. The method according to claim 1, wherein an amount of timing advance corresponding to the timing advanced information is reversed in direction with respect to a dedicated amount of timing advance of the first communication signal.

6. The method according to claim 2, further comprising:
transmitting dynamic indication information; wherein the dynamic indication information is configured to instruct the second node to:
determine the amount of timing advance corresponding to the first communication signal according to the timing advanced information; or
determine the amount of timing advance corresponding to the first communication signal according to a dedicated amount of timing advance of the first communication signal; or
determine the amount of timing advance corresponding to the first communication signal according to both of the timing advanced information, and the dedicated amount of timing advance of the first communication signal.

7. The method according to claim 6, wherein the dynamic indication information is transmitted through dedicated signaling for the second node.

8. The method according to claim 6, wherein the dynamic indication information is transmitted via broadcast or multicast.

9. The method according to claim 1, wherein the indication information is transmitted to a third node; and
the timing advanced information is determined according to an amount of timing advance corresponding to the first communication signal.

10. The method according to claim 1, wherein receiving the sensing signal, and the first communication signal sent by the second node comprises,
receiving the first communication signal with priority in response to a presence of conflict between the sensing signal and the first communication signal.

11. A method for signal transmission, which is applied to a second node, the method comprising,
receiving indication information that is indicative of a preset resource set for transmitting a sensing signal, and timing advanced information corresponding to the preset resource set; and
transmitting a first communication signal to a first node according to the indication information.

12. The method according to claim 11, wherein transmitting the first communication signal to the first node according to the indication information comprises,
determining an amount of timing advance corresponding to the first communication signal according to the indication information; and
transmitting the first communication signal to the first node according to the amount of timing advance corresponding to the first communication signal.

13. The method according to claim 12, further comprising,
receiving dynamic indication information; wherein the dynamic indication information is configured to instruct the second node to:
determine the amount of timing advance corresponding to the first communication signal according to the timing advanced information; or
determine the amount of timing advance corresponding to the first communication signal according to a dedicated amount of timing advance of the first communication signal; or
determine the amount of timing advance corresponding to the first communication signal according to both of the timing advanced information, and the dedicated amount of timing advance of the first communication signal.

14. The method according to claim 12, wherein determining the amount of timing advance corresponding to a transmission of the first communication signal according to the indication information comprises,
determining the amount of timing advance corresponding to the first communication signal according to the timing advanced information in response to a presence of conflict between the resources occupied by the first communication signal and the preset resource set.

15. The method according to claim 12, wherein determining the amount of timing advance corresponding to the transmission of the first communication signal according to the indication information comprises,
determining the amount of timing advance corresponding to the first communication signal according to both the timing advanced information and a dedicated amount of timing advance of the first communication signal, in response to a presence of conflict between the resources occupied by the first communication signal and the preset resource set.

16. The method according to claim 12, wherein determining the amount of timing advance corresponding to the transmission of the first communication signal according to the indication information comprises,
determining the amount of timing advance corresponding to the first communication signal according to a dedicated amount of timing advance of the first communication signal, in response to an absence of conflict between the resources occupied by the first communication signal and the preset resource set.

17. The method according to claim 11, wherein the indication information is transmitted by a first node or a third node via broadcast or multicast.

18. The method according to claim 11, wherein an amount of timing advance corresponding to the timing advanced information is reversed in direction with respect to a dedicated amount of timing advance of the first communication signal.

19. A method for signal transmission, which is applied to a third node, the method comprising,
receiving indication information that is indicative of a preset resource set for transmitting a sensing signal, and timing advanced information corresponding to the preset resource set; and
transmitting a sensing signal to a first node according to the indication information.

20. The method according to claim 19, wherein,
the timing advanced information is determined according to an amount of timing advance corresponding to the first communication signal sent by the second node.

21. A method for signal transmission, which is applied to a first node, the method comprising,
receiving a sensing signal;
determining an amount of timing advance for transmitting a second communication signal according to resources for transmitting the sensing signal; and
transmitting the second communication signal according to the amount of timing advance for transmitting the second communication signal.

22. The method of claim 21, wherein the sensing signal is transmitted over K consecutive symbols within a time slot; and
an amount of timing advance for transmitting the second communication signal satisfies:
in response to a determination that K is less than M, the second communication signal is prevented from being transmitted over a symbol conflicting with the sensing signal and having a symbol index within a range of [K₁+Δ, Kₖ+Δ] in the time slot; wherein Δ is a positive integer less than or equal to M-K, K₁ is an index of a starting symbol in the K consecutive symbols, and Kₖ is an index of an ending symbol in the K consecutive symbols.

23. The method of claim 21, wherein the sensing signal is transmitted over K consecutive symbols within a time slot; and
an amount of timing advance for transmitting the second communication signal satisfies:
in response to a determination that K is equal to M, the second communication signal is prevented from being transmitted over a symbol conflicting with the sensing signal, and having a symbol index within a range of [K₁+Δ, M] in the time slot and having a symbol index within a range of [0, Δ] in a subsequent time slot to the time slot; wherein Δ is a positive integer less than or equal to M-K, K₁ is an index of a starting symbol in the K consecutive symbols, and M is a total number of symbols in the time slot.

24. A method for signal transmission, which is applied to a third node, the method comprising,
transmitting a sensing signal;
determining an amount of timing advance for transmitting a third communication signal according to resources for transmitting the sensing signal; and
transmitting the third communication signal according to the amount of timing advance for transmitting the third communication signal.

25. The method of claim 24, wherein the sensing signal is transmitted over K consecutive symbols within a time slot; and
an amount of timing advance for transmitting the third communication signal satisfies:
in response to a determination that K₁ is greater than 1, the third communication signal is prevented from being transmitted over a symbol conflicting with the sensing signal and having a symbol index within a range of [K₁-Δ, Kₖ-Δ] in the time slot; wherein K₁ is an index of a starting symbol in the K consecutive symbols, Kₖ is an index of an ending symbol in the K consecutive symbols, and Δ is a positive integer less than or equal to K₁.

26. The method of claim 24, wherein the sensing signal is transmitted over K consecutive symbols within a time slot; and
an amount of timing advance for transmitting the third communication signal satisfies:
in response to a determination that K1 is equal to 1, the third communication signal is prevented from being transmitted over a symbol conflicting with the sensing signal and having a symbol index within a range of [M-Δ, M] in a preceding time slot; wherein Δ is a positive integer less than or equal to Ki, and M is a total number of symbols in the time slot.

27. A communication node, comprising a memory, a processor, and a computer program stored in the memory and executable on the processor which, when executed by the processor, causes the processor to carry out the method for signal reception according to any one of claims 1 to 10 or the method for signal reception according to any one of claims 11 to 26.

28. A computer-readable storage medium having stored thereon a computer program which, when executed by a processor, causes the processor to carry out the method for signal reception according to any one of claims 1 to 10 or the method for signal reception according to any one of claims 11 to 26.
